# FASCICULE DE BREVET EUROPEEN

(11) **EP 0 732 982 B1**
(45) Date de publication et mention de la délivrance du brevet: **27.08.1997**
(21) Numéro de dépôt: 95902806.9
(22) Date de dépôt: 30.11.1994
(51) Int. Cl.: B23K 1/012

(54) **MACHINE POUR CONFINER UN FLUIDE PRIMAIRE A L'AIDE D'UN FLUIDE SECONDAIRE EN PHASE VAPEUR**
VORRICHTUNG ZUM ZURUECKHALTEN VON PRIMAERFLUESSIGKEIT MIT HILFE EINER SEKUNDAERFLUESSIGKEIT IN DAMPFPHASE
MACHINE FOR CONTAINING A PRIMARY FLUID USING A VAPOUR PHASE SECONDARY FLUID

(30) Priorité: 07.12.1993 FR 9314948
(43) Date de publication de la demande: 25.09.1996
(73) Titulaire: Garidel, Jean-Paul, F-26000 Valence (DE)
(72) Inventeur: Garidel, Jean-Paul, F-26000 Valence (DE)
(74) Mandataire: Thibault, Jean-Marc
(86) Numéro de dépôt international: FR9401388
(87) Numéro de publication internationale: WO9515831

(56) Documents cités:
- FR-A- 2 656 973
- FR-A- 2 663 496
- US-A- 4 840 305
- PATENT ABSTRACTS OF JAPAN vol. 16 no. 94 (M-1219) ,9 Mars 1992 & JP,A,03 275269 (MATSUSHITAT ELECTRON CORP) 5 Décembre 1991,

## Description

### DOMAINE TECHNIQUE :

La présente invention concerne le domaine technique du confinement, à l'aide d'un fluide secondaire en phase vapeur, d'un fluide primaire adapté pour assurer un traitement, au sens général, à des pièces ou à des objets divers.

Le maintien du fluide primaire dans un espace limité s'avère nécessaire lorsque le fluide est de nature dangereuse et/ou présente un prix d'achat élevé. A titre d'exemple non limitatif, le fluide primaire peut être du Perchloroéthylène, du Trichloroéthylène, tous types de solvants ou un liquide du type fluorocarboné.

L'objet de l'invention trouve une application, par exemple, dans le domaine du nettoyage ou du dégraissage de pièces ou d'objets.

L'objet de l'invention trouve une autre application particulièrement avantageuse dans le domaine technique visant à assurer, sur un support, le montage de composants au sens général, du type par exemple électronique, électrique, électromécanique ou mécanique, à l'aide d'un matériau d'apport déposé ponctuellement en relation des pattes de fixation des composants. Plus précisément, l'invention peut être mise en oeuvre dans la technique d'assemblage de composants par polymérisation, dans laquelle le matériau d'apport est formé par un polymère ou dans la technique de refusion ou de soudure de composants pour laquelle le matériau d'apport est constitué par un alliage.

### TECHNIQUE ANTERIEURE :

Selon ces techniques, il est connu, d'une manière habituelle, de mettre en oeuvre une machine de traitement comportant une cuve contenant un liquide du type fluorocarboné destiné à être porté à une température d'ébullition par des moyens de chauffage, de manière à produire, dans une zone d'assemblage ou de soudure, une vapeur primaire saturée et inerte dont la température est légèrement supérieure au point de fusion du matériau d'apport. La zone d'assemblage ou de soudure est délimitée sensiblement entre le niveau du liquide et un serpentin assurant une condensation de la vapeur primaire. Cette zone d'assemblage ou de soudure est surmontée ou non par une zone de préchauffage ou de refroidissement dans laquelle règne une vapeur secondaire.

La cuve comporte, dans sa partie haute, une ouverture de passage susceptible d'être fermée par un couvercle et destinée à autoriser l'introduction, à l'intérieur de la cuve, du support équipé des composants à assembler. Un tel support est pris en charge par un appareil assurant son déplacement et son maintien successivement dans les zones de préchauffage, de soudure et de refroidissement. Ainsi, après un maintien du support dans la zone de préchauffage, pendant un temps déterminé, le support est mis en contact avec la vapeur primaire pour obtenir un transfert de la chaleur latente de condensation de la vapeur vers le support et les composants associés. Cet apport calorifique élève rapidement et uniformément la température du support et des composants jusqu'à celle de la vapeur primaire entraînant la fusion du matériau d'apport et, par suite, suivant la technique utilisée, le soudage par brasure ou la polymérisation des composants sur le support.

A titre d'exemple, la demande de brevet FR-A1-2 663 496 décrit une telle machine dont le fonctionnement donne satisfaction en pratique. Toutefois, il est à noter que le liquide secondaire utilisé est généralement du type CFC, visé par la convention de Montréal, dont l'interdiction future est prononcée. Une telle situation à conduit à la mise en oeuvre, plus particulièrement, de deux types de machines fonctionnant soit en simple phase, soit en double phase.

Une machine fonctionnant en simple phase ne comporte pas une zone de préchauffage ou de refroidissement constituée par une vapeur secondaire. De plus, le serpentin assurant la condensation de la valeur primaire est supprimé, la condensation de la vapeur primaire étant assurée par une ceinture réfrigérée placée à la partie haute de la cuve. Le préchauffage des pièces est généralement assuré par un rayonnement infrarouge. Cette solution présente des inconvénients, dans la mesure où le refroidissement s'effectue dans une atmosphère ambiante non inerte susceptible de nuire à la qualité métallurgique des soudures réalisées.

L'autre type de machine qui fonctionne en double phase vapeur comporte une vapeur secondaire surmontant une vapeur primaire. L'interdiction des CFC conduit à l'emploi d'un liquide secondaire de substitution nécessitant le remplacement du réfrigérant de condensation de la vapeur primaire par de l'huile thermostatée. Si cette technique en double phase permet d'assurer une bonne qualité métallurgique des soudures et de respecter les normes de protection de l'environnement, il doit être constaté que le contrôle de la température de l'huile de refroidissement s'avère particulièrement délicat à mettre en oeuvre.

Il apparaît donc le besoin de pouvoir disposer d'une machine assurant le confinement efficace, à l'aide d'un fluide secondaire en phase vapeur de nature non dangereuse, d'un fluide primaire dont le contrôle de la température s'avère, par ailleurs, particulièrement facile à mener à bien.

### EXPOSE DE L'INVENTION :

L'objet de l'invention vise donc à satisfaire ce besoin, en proposant une machine de confinement d'un fluide primaire, adaptée pour respecter les normes de protection de l'environnement et conçue pour présenter une facilité à obtenir une régulation thermique de la température de la vapeur primaire à l'intérieur de la cuve.

Pour atteindre cet objectif, la machine de confinement, selon l'invention, d'un fluide primaire à l'aide d'un fluide secondaire, dont la température d'ébullition est inférieure à celle du fluide primaire, comporte au moins une cuve de traitement équipée, d'une part, de moyens de chauffage adaptés pour porter à ébullition le fluide primaire, de manière à produire une vapeur primaire dans une zone d'utilisation surmontée par des moyens de refroidissement et, d'autre part, des moyens de production, à partir du fluide secondaire, d'une vapeur secondaire dans une zone de préchauffage ou de refroidissement surmontant la zone d'utilisation.

Selon l'invention, les moyens de refroidissement de la vapeur primaire sont constitués par un échangeur thermique, entre la vapeur primaire et le fluide secondaire, l'échangeur étant pourvu d'orifices d'évacuation de la vapeur secondaire à l'intérieur de la cuve, de sorte que l'échangeur assure une condensation de la vapeur primaire et une vaporisation du fluide secondaire permettant d'obtenir une autostabilisation thermique à l'intérieur de la cuve.

Un autre objectif de l'invention vise à mettre en oeuvre une machine de confinement permettant le passage relativement facile d'un fonctionnement en double phase à un fonctionnement en simple phase, et réciproquement.

A cet effet, le réservoir est pourvu d'une canalisation de vidange du fluide secondaire muni d'un obturateur commandé et, d'autre part, d'une canalisation de retour à la cuve du fluide primaire munie d'un obturateur commandé, les obturateurs des canalisations de vidange, de trop-plein et de retour de la cuve étant commandés pour permettre le passage d'un mode de fonctionnement dit en double phase, mettant en oeuvre les fluides primaire et secondaire, à un mode de fonctionnement dit en simple phase pour lequel uniquement est utilisé le fluide primaire et, réciproquement.

Diverses autres caractéristiques ressortent de la description faite ci-dessous en référence aux dessins annexés qui montrent, à titre d'exemples des formes de réalisation et de mise en oeuvre de l'objet de l'invention.

### BREVE DESCRIPTION DES DESSINS :

La **fig. 1** est une coupe en élévation montrant, sur les parties gauche et droite, deux exemples de réalisation d'une machine de confinement conforme à l'invention, adaptée à la soudure.

La **fig. 2** est une vue partielle en perspective montrant des détails caractéristiques de l'invention.

La **fig. 3** est un schéma hydraulique simplifié permettant d'expliquer une caractéristique de l'invention.

### MEILLEURE MANIERE DE REALISER L'INVENTION :

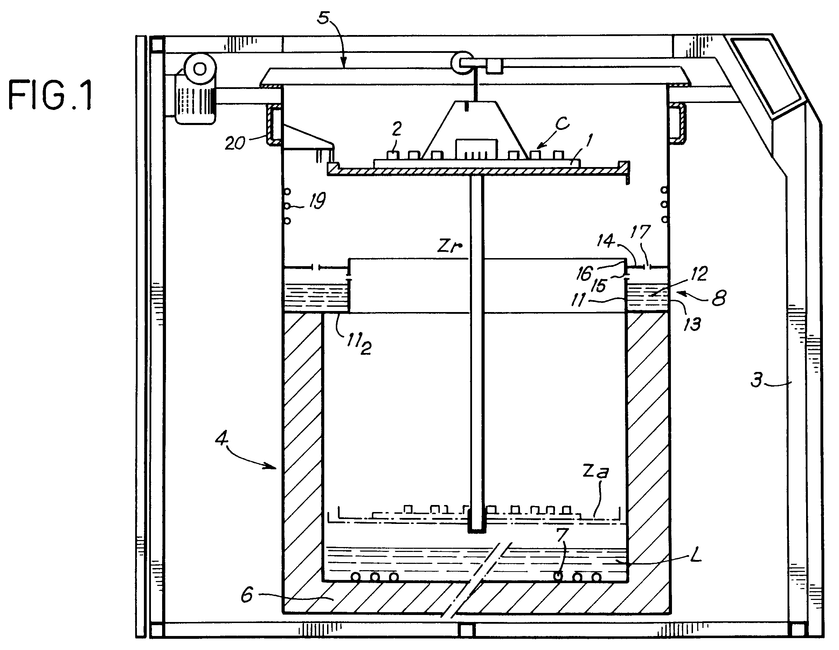

La **fig. 1** illustre un exemple d'application de l'invention à une machine d'assemblage en phase vapeur permettant de monter, sur un support **1** au sens général, des composants **2** de tous types en combinaison ou non, tels qu'électroniques, électriques, mécaniques ou électromécaniques, organisés de manière appropriée pour assumer des fonctions spécifiques en relation de leur application visée. Dans l'exemple décrit ci-dessus, qui vise la technique de refusion en phase vapeur, le support **1** constitue un circuit imprimé destiné à recevoir des composants **2** fixés à l'aide d'un matériau d'apport constitué par un alliage. L'ensemble C, constitué par le circuit imprimé **1** équipé par les différents composants **2**, est appelé carte dans la suite de la description.

La machine comporte un bâti de protection **3** dans lequel est inséré une cuve de traitement **4** fermée à sa partie supérieure par un couvercle **5**. La cuve de traitement **4** est pourvue extérieurement d'une enveloppe d'isolation thermique **6**. Le fond de la cuve est équipé de moyens de chauffage **7** tels que des résistances électriques. Les résistances **7** sont destinées à porter à ébullition un liquide primaire **L** qui, dans l'exemple illustré, est du type fluorocarboné, de sorte qu'il peut être produit une vapeur primaire saturée et inerte dont la température est légèrement supérieure au point de fusion de l'alliage préalablement déposé sur le circuit **1** en relation des pattes de fixation des composants **2**. La vapeur primaire est destinée à régner dans une zone d'utilisation, d'assemblage ou de soudure **Za** délimitée sensiblement par le niveau du liquide et par des moyens de refroidissement **8** conformes à l'invention, qui sont décrits plus précisément dans la suite de la description.

Les moyens de refroidissement **8** sont constitués par un échangeur thermique **11** entre la vapeur primaire et un liquide secondaire **12** possédant une température d'ébullition inférieure à celle du liquide primaire. L'échangeur thermique **11** est constitué, au moins en partie, par les parois d'un bac, d'une gouttière ou d'un réservoir **13** contenant le liquide secondaire **12**.

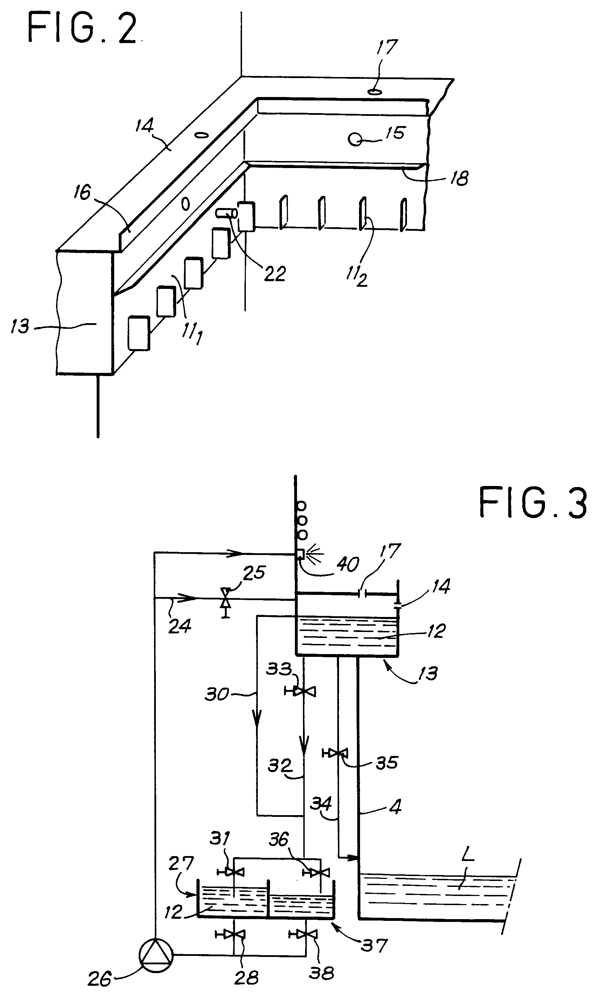

Tel que cela ressort plus précisément des **fig. 1** et **2**, le réservoir **13** s'étend à un niveau donné du fond de la cuve **4**, sur toute la périphérie de cette dernière. Le réservoir **13** comporte au moins une surface d'échange thermique **11**_{**1**} constituée par la paroi du réservoir placée du côté intérieur de la cuve. Tel qu'illustré à la **fig. 2**, la surface d'échange thermique peut être accrue par la mise en oeuvre d'ailettes radiantes **11**_{**2**} portées par la paroi du réservoir placée du côté intérieur et, éventuellement, portées également par la paroi opposée du réservoir, placée du côté extérieur de la cuve.

Selon une première forme de réalisation illustrée sur la partie droite de la **fig. 1**, le réservoir **13** présente une paroi interne **11**_{**1**} s'étendant sensiblement dans le prolongement de la paroi interne de la cuve.

Selon une deuxième forme de réalisation illustrée sur la partie gauche de la **fig. 1**, la paroi interne **11**_{**1**} du réservoir dépasse du plan contenant la paroi interne de la cuve. A cet effet, une partie **11**_{**2**} de la paroi de fond du réservoir, dont la fonction apparaîtra dans la suite de la description, s'étend en saillie par rapport à la paroi interne de la cuve.

Le réservoir est équipé d'un couvercle **14** et communique avec le volume intérieur de la cuve **4** par l'intermédiaire d'orifices de sortie **15** ménagés dans la paroi interne **11**_{**1**}. Les orifices **15** assurent le passage des vapeurs secondaires provenant de la vaporisation du liquide secondaire **12**. Les vapeurs secondaires sont destinée à régner dans une zone de préchauffage ou de refroidissement **Zr** située au-dessus de la zone d'assemblage **Za**. Avantageusement, les orifices de sortie **15** présentent une surface totale de passage inférieure à la surface du liquide secondaire contenu dans le réservoir **13**, de manière à créer une surpression conduisant à une éjection des vapeurs secondaires et à une distribution des vapeurs même au centre de la cuve. Il s'ensuit la création d'un matelas de vapeur secondaire assurant un confinement efficace du liquide primaire.

De préférence, le couvercle **14** est aménagé pour récupérer les vapeurs secondaires condensées. Par exemple, le couvercle **14** est pourvu d'un rebord **16** délimitant avec la paroi interne de la cuve, un canal de récupération communiquant avec le réservoir **13** par l'intermédiaire d'ouvertures de passage **17**. Dans une forme de réalisation illustrée à la **fig. 2**, il peut être envisagé de munir la paroi interne **11**_{**1**} d'une gouttière **18** assurant aussi la récupération des vapeurs secondaires condensées.

Le réservoir **13** est surmonté par un serpentin **19** de condensation de la vapeur secondaire. D'une manière classique, la cuve **4** est équipée, à sa partie supérieure, d'une ceinture de refroidissement **20** placée au-dessus du serpentin **19**, de manière à assurer une condensation pratiquement complète des vapeurs résiduelles et une limitation de la consommation de liquide.

La machine décrite ci-dessus fonctionne de la manière suivante.

La mise en marche des moyens de chauffage **7** conduit à la vaporisation du liquide primaire **L**. Une partie de la vapeur primaire vient se condenser sur les surfaces de l'échangeur thermique **11**. Les parois du réservoir **13** assurent ainsi le transfert des calories au liquide secondaire, dont la vapeur émise est évacuée dans la zone de préchauffage ou de refroidissement **Zr** par les orifices de sortie **15**. Il est à noter qu'une augmentation du niveau de la vapeur primaire entraîne une augmentation de la surface efficace pour l'échange thermique, ce qui conduit à un accroissement concomitant de l'émission de la vapeur secondaire. L'augmentation de l'émission de la vapeur secondaire permet d'accroître l'épaisseur du matelas de vapeur secondaire, ce qui a pour effet d'abaisser le niveau de la vapeur primaire. L'abaissement de ce niveau a pour effet de diminuer la surface efficace pour l'échange thermique, de sorte que l'émission de la vapeur secondaire décroît. La diminution de l'épaisseur du matelas de la vapeur secondaire entraîne une augmentation du niveau de la vapeur primaire et, par suite, une augmentation de la surface d'échange. Le processus tel que décrit ci-dessus se reproduit jusqu'à une stabilisation thermique. Il s'ensuit que la machine selon l'invention permet d'obtenir une autorégulation ou une autostabilisation thermique à l'intérieur de la cuve, tout en assurant un confinement efficace de la vapeur primaire à l'intérieur de la cuve par l'intermédiaire du matelas de vapeur secondaire.

Il doit être compris que la surface d'échange thermique de l'échangeur s'ajuste automatiquement au nombre de calories excédentaires à évacuer et produites par les moyens de chauffage **7**. La surface d'échange thermique varie donc entre une valeur nulle prise au niveau du fond du réservoir **13** et une valeur maximale correspondant au niveau pris par le liquide secondaire **12** à l'intérieur du réservoir. Il est à noter que, dans l'exemple de réalisation illustré sur la partie gauche de la **fig. 1**, la surface d'échange thermique varie entre une valeur maximale correspondant à la hauteur maximale prise par le liquide secondaire à l'intérieur du réservoir **13** et une valeur minimale constante définie par la paroi de fond **11**_{**2**} du réservoir dépassant de la paroi interne de la cuve. D'une manière générale, il doit être considéré que l'échangeur thermique **11** doit présenter une surface d'échange dont les dimensions sont adaptées pour absorber les calories de la vapeur primaire obtenues avec la puissance maximale des moyens de chauffage. A cet égard, il est prévu, en cas de défaillance, la mise en oeuvre d'une sonde de température **22** montée sur le réservoir **13** et reliée à des moyens adaptés pour arrêter le fonctionnement des éléments chauffants **7**, lorsque la température de la sonde atteint une valeur correspondant sensiblement à celle d'ébullition de la vapeur primaire.

Le niveau de la vapeur primaire dépend de la puissance délivrée par les moyens de chauffage **7** et de la surface d'échange thermique de l'échangeur **11**. D'une manière supplémentaire, il peut être prévu d'équiper le réservoir **13** de moyens de refroidissement du liquide secondaire **12**. A titre d'exemple, ces moyens de refroidissement peuvent être constitués par un serpentin placé dans le réservoir ou par une enveloppe de refroidissement entourant le réservoir.

La machine selon l'invention offre également l'avantage de pouvoir passer facilement d'un fonctionnement double phase à un fonctionnement simple phase. Tel que cela ressort plus précisément de la **fig.3**, le réservoir **13** est pourvu d'une canalisation **24** d'amenée du liquide secondaire, munie d'un obturateur commandé **25** et reliée à une pompe **26** connectée à une bâche **27** réservée au liquide secondaire **12**. La canalisation de sortie de la bâche **27**, située en amont de la pompe **26** est équipée d'un obturateur commandé **28**.

Le réservoir **13** est également pourvu d'une canalisation de trop-plein **30** fixant le niveau maximal du liquide secondaire **12** à l'intérieur du réservoir **13**. La canalisation de trop-plein **30** retourne à la bâche **27** et se trouve équipée d'un obturateur commandé **31**. Le réservoir **13** comporte une canalisation de vidange **32** retournant à la bâche **27** et munie d'un obturateur commandé **33**. Le réservoir **13** est également pourvu d'une canalisation **34** équipée d'un obturateur commandé **35** et assurant une communication entre le réservoir **13** et l'intérieur de la cuve **4**.

Lors du fonctionnement en double phase, les obturateurs **33, 35** sont fermés, tandis que les obturateurs **25, 28, 31** sont en position d'ouverture, la pompe **26** étant commandée en fonctionnement pour assurer l'amenée du liquide secondaire à l'intérieur du réservoir **13**.

Lors du passage d'un fonctionnement en double phase vapeur à un fonctionnement simple phase, les éléments chauffants **7** sont arrêtés ainsi que la pompe **26**. L'obturateur **33** de la canalisation de vidange est ouvert jusqu'à ce que le liquide secondaire **12**, contenu dans le réservoir, vienne à être évacué totalement du réservoir. Les obturateurs **25**, **31** et **33** sont fermés et l'obturateur **35** de la canalisation **34** de retour à la cuve est ouvert. Lors du fonctionnement en simple phase, le réservoir **13** récupère les condensats de la vapeur primaire qui sont acheminés par la canalisation **34**, à l'intérieur de la cuve **4**.

Afin de passer d'un fonctionnement simple phase à un fonctionnement double phase, les moyens de chauffage sont arrêtés et l'obturateur **35** est fermé. Les obturateurs **31**, **28** et **25** sont ouverts et la pompe **26** est mise en marche pour permettre le remplissage du réservoir **13** par le liquide secondaire. Les moyens de chauffage **7** sont ensuite commandés en mode de fonctionnement.

Tel que cela ressort de la description qui précède, la machine selon l'invention permet le passage aisé d'un fonctionnement simple phase vapeur à un fonctionnement double phase vapeur et, réciproquement. Cette machine présente également l'avantage de permettre une purification du liquide primaire. Pour cette opération, la canalisation de vidange **32** doit être pourvue d'une dérivation munie d'un obturateur commandé **36** et aboutissant à une bâche **37** réservée au liquide primaire **L**. La sortie de la bâche **37** est reliée à la pompe **26** et se trouve équipée d'un obturateur commandé **38**. La régénération du liquide primaire consiste, après avoir vidé le réservoir **13** du liquide secondaire, à fermer les obturateurs **25, 31, 35, 28** et à ouvrir les obturateurs **33, 36, 38**. Les éléments chauffants **7** sont mis en service jusqu'à ce que la température mesurée au niveau supérieur de la cuve **4** atteigne la température d'ébullition du liquide primaire. Après l'arrêt des moyens de chauffage **7**, la cuve **4** peut être nettoyée. Ensuite, les obturateurs **33, 31, 36, 28** sont fermés, tandis que les obturateurs **25, 35, 38** sont ouverts. La pompe **26** est commandée en fonctionnement, de manière à transférer le liquide primaire purifié contenu dans la bâche **37** dans la cuve **4** via le réservoir **13** et la canalisation de retour **34**.

Selon une caractéristique avantageuse de l'invention, il peut être prévu que le réservoir **13** se trouve surmonté par au moins un point d'injection de liquide **40**. Tel que cela apparaît à la **fig. 3**, le point d'injection **40** est relié à la sortie de la pompe **26**. L'injecteur **40** a pour fonction d'injecter de fines gouttelettes d'un liquide froid au niveau de la carte en cours de refroidissement. La carte est ainsi séchée par abaissement du point d'ébullition du liquide condensé sur celle-ci permettant d'obtenir un refroidissement plus rapide. L'évaporation du liquide utilise une grande quantité de chaleur contenue dans la carte. Il est à noter que la quantité de liquide injecté permet de régler la vitesse de refroidissement.

Le refroidissement par injection de liquide et son évaporation permettent de réduire le temps de refroidissement et, par suite, d'améliorer la qualité métallurgique des soudures. Cette technique de refroidissement est mise en oeuvre aussi plus particulièrement en mode double phase en alimentant l'injecteur **40** par du liquide secondaire. Pour l'opération de refroidissement, les obturateurs **25, 35, 36, 38** sont fermés tandis que les obturateurs **31, 28** sont ouverts. L'obturateur **33** est ouvert par intermittence, afin de maintenir le liquide secondaire dans le réservoir **13** à un niveau donné.

### POSSIBILITE D'APPLICATION INDUSTRIELLE :

Dans la description qui précède, l'invention concerne une machine adaptée plus particulièrement pour le brasage de pièces à l'aide d'un liquide primaire **L** confiné par une vapeur secondaire. Il doit être considéré que l'objet de l'invention concerne, d'une manière générale, une machine comportant une ou plusieurs cuves et permettant le confinement, à l'aide d'un fluide secondaire en phase vapeur, d'un fluide primaire vaporisé ou non, dont la nature est adaptée à assurer un traitement à des pièces ou à des objets de diverses natures. A titre d'exemple, le fluide primaire est adapté pour assurer un nettoyage ou un dégraissage et peut être constitué de tous types de solvants y compris les liquides fluorocarbonés. Bien entendu, la température d'ébullition du fluide secondaire doit être inférieure à celle du fluide primaire, la différence de température devant être suffisante pour permettre la séparation des phases. Par ailleurs, le fluide secondaire possède un caractère inerte, ininflammable, inexplosible et non toxique.

## Revendications

1. Machine de confinement d'un fluide primaire à l'aide d'un fluide secondaire dont la température d'ébullition est inférieure à celle du fluide primaire, la machine comportant au moins une cuve de traitement (**4**) équipée, d'une part, de moyens de chauffage (**7**) adaptés pour porter à ébullition le fluide primaire (**L**), de manière à produire une vapeur primaire dans une zone d'utilisation (**Za**) surmontée par des moyens de refroidissement (**8**) et, d'autre part, des moyens de production à partir du fluide secondaire (**12**), d'une vapeur secondaire dans une zone de préchauffage ou de refroidissement (**Zr**) surmontant la zone d'utilisation (**Za**),
caractérisée en ce que les moyens de refroidissement (**8**) de la vapeur primaire sont constitués par un échangeur thermique (**11**) entre la vapeur primaire et le fluide secondaire (**12**), l'échangeur étant pourvu d'orifices d'évacuation (**15**) de la vapeur secondaire à l'intérieur de la cuve (**4**), de sorte que l'échangeur assure une condensation de la vapeur primaire et une vaporisation du fluide secondaire permettant d'obtenir une autostabilisation thermique à l'intérieur de la cuve.

2. Machine selon la revendication **1**, caractérisé en ce que l'échangeur thermique (**11**) est constitué, au moins en partie, par les parois d'un réservoir (**13**) contenant le fluide secondaire (**12**).

3. Machine selon la revendication 2, caractérisée en ce que le réservoir (**13**) comporte un fond (**11**_{**2**}) s'étendant en saillie par rapport à la paroi de la cuve, de manière à constituer une surface définissant un échange thermique constant.

4. Machine selon la revendication 2 ou 3, caractérisée en ce que le réservoir (**13**) est pourvu d'une canalisation (**24**) d'amenée du fluide secondaire (**12**) dont le niveau, à l'intérieur du réservoir (**13**), est maintenu à une valeur constante à l'aide d'une canalisation de trop-plein (**30**) pourvue d'un obturateur commandé (**31**), la surface d'échange thermique étant susceptible de varier entre le fond du réservoir (**13**) et le niveau maximal du fluide fixé par la canalisation de tropplein.

5. Machine selon l'une des revendications 2 à 4, caractérisée en ce que le réservoir (13) présente une surface d'échange thermique dont les dimensions sont adaptées pour absorber les calories de la vapeur primaire obtenues avec la puissance maximale des moyens de chauffage (**7**).

6. Machine selon l'une des revendications 2 à 5, caractérisée en ce que le réservoir (**13**) est équipé d'un couvercle (**14**) de récupération des vapeurs secondaires.

7. Machine selon l'une des revendications 2 à 6, caractérisée en ce que le réservoir (**13**) est pourvu d'une gouttière (**18**) de récupération des vapeurs secondaires s'étendant du côté intérieur de la cuve.

8. Machine selon l'une des revendications 2 à 7, caractérisée en ce que le réservoir (**13**) est équipé de moyens de refroidissement du fluide secondaire.

9. Machine selon l'une des revendications 2 à 8, caractérisée en ce que le réservoir (**13**) est muni d'une sonde de température (**22**) reliée à des moyens adaptés pour arrêter le fonctionnement des éléments chauffants (**7**) du fluide primaire, lorsque la température de la sonde atteint une valeur correspondant sensiblement à celle d'ébullition de la vapeur primaire.

10. Machine selon l'une des revendications 2 à 8, caractérisée en ce que le réservoir (**13**) est pourvu, d'une part, d'une canalisation (**32**) de vidange du fluide secondaire muni d'un obturateur commandé (**33**) et, d'autre part, d'une canalisation de retour (**34**) à la cuve (**4**) du fluide primaire munie d'un obturateur commandé (**35**), les obturateurs (**33, 31, 35**) des canalisations de vidange (**32**), de trop-plein (**30**) et de retour à la cuve (**34**) étant commandés pour permettre le passage d'un mode de fonctionnement dit en double phase, mettant en oeuvre les fluides primaire et secondaire, à un mode de fonctionnement dit en simple phase pour lequel uniquement est utilisé le fluide primaire et, réciproquement.

11. Machine selon l'une des revendications 2 à 8, caractérisé en ce que le réservoir (**13**) est surmonté par au moins un point d'injection (**40**) de fluide secondaire.

12. Machine selon la revendication 10, caractérisée en ce que la canalisation de vidange (**32**) est pourvue de moyens de dérivation commandés (**31, 36**) permettant d'assurer le retour du fluide primaire à sa bâche (**37**), lorsque le fluide primaire est vaporisé dans la cuve et les condensats récupérés par le réservoir (**13**), afin d'obtenir la régénération du fluide primaire.

13. Machine selon la revendication 1, caractérisée en ce que les orifices de sortie (**15**) de la vapeur secondaire présentent une surface totale inférieure à la surface du fluide secondaire pour assurer une surpression et une éjection de la vapeur.

## Claims

1. A machine for confining a primary fluid by means of a secondary fluid whose boiling temperature is lower than that of the primary fluid, the machine including at least one treatment tank (4) fitted both with heater means (7) suitable for raising the primary fluid (L) to boiling temperature, in such a manner as to produce a primary vapor in a utilization zone (Za) which is surmounted by cooling means (8), and secondly means for producing a secondary vapor from a secondary fluid (12), the secondary vapor occupying a preheating or cooling zone (Zr) surmounting the utilization zone (Za),
the machine being characterized in that the cooling means (8) for cooling the primary vapor are constituted by a heat exchanger (11) for exchanging heat between the primary vapor and the secondary fluid (12), the heat exchanger being provided with outlet orifices (15) for expelling secondary vapor into the inside of the tank (4) so that the heat exchanger condenses the primary vapor and vaporizes the secondary fluid, thereby enabling thermal self-stabilization to be obtained inside the tank.

2. A machine according to claim 1, characterized in that the heat exchanger (11) is constituted, at least in part, by the walls of a reservoir (13) containing the secondary fluid (12).

3. A machine according to claim 2, characterized in that the reservoir (13) has a bottom (11₂) that projects from the wall of the tank so as to constitute an area defining constant heat exchange.

4. A machine according to claim 2 or 3, characterized in that the reservoir (13) is provided with a pipe (24) for feeding secondary fluid (12) whose level is maintained inside the reservoir (13) at a constant value by means of an overflow pipe (30) provided with a controlled valve (31), the heat exchange area being capable of varying between the bottom of the reservoir (13) and the maximum fluid level as set by the overflow pipe.

5. A machine according to one of claims 2 to 4, characterized in that the reservoir (13) has a heat exchange area of dimensions that are adapted to absorb heat from the primary vapor as obtained when the heater means (7) are operating at full power.

6. A machine according to one of claims 2 to 5, characterized in that the reservoir (13) is provided with a cover (14) for recovering secondary vapor.

7. A machine according to one of claims 2 to 6, characterized in that the reservoir (13) is provided with a gutter (18) for recovering secondary vapor and extending into the inside of the tank.

8. A machine according to one of claims 2 to 7, characterized in that the reservoir (13) is fitted with cooling means for cooling the secondary fluid.

9. A machine according to one of claims 2 to 8, characterized in that the reservoir (13) is provided with a temperature probe (22) connected to means adapted to stop operation of the heater elements (7) for heating the primary fluid in the event that the temperature of the probe reaches a value that corresponds substantially to the boiling temperature of the primary vapor.

10. A machine according to one of claims 2 to 8, characterized in that the reservoir (13) is provided both with a drain pipe (32) for draining the secondary fluid, which pipe is provided with a controlled valve (33), and with a return pipe (34) for returning primary fluid to the tank (4) and itself fitted with a controlled valve (35), the valves (33, 31, 35) of the drain pipe (32), the overflow pipe (30), and the tank return pipe (34) being controlled so as to enable operation to switch from a "two-phase" mode of operation using both the primary and the secondary fluids to a "one-phase" mode of operation in which only the primary fluid is used, and back again.

11. A machine according to one of claims 2 to 8, characterized in that the reservoir (13) is surmounted by at least one secondary fluid injection point (40).

12. A machine according to claim 10, characterized in that the drain pipe (32) is provided with controlled branch means (31, 36) enabling the primary fluid to be returned to a return vessel (37) when the primary fluid is vaporized in the tank and the condensates are recovered by the reservoir (13), thereby enabling the primary fluid to be regenerated.

13. A machine according to claim 1, characterized in that the total surface area of the secondary vapor outlet orifices (15) is smaller than the area of the surface of the secondary fluid so as to ensure that the vapor is at excess pressure, causing it to be ejected.

## Patentansprüche

1. Maschine zum Einschließen eines primären Fluids mit Hilfe eines sekundären Fluids, dessen Siedetemperatur unterhalb jener des primären Fluids liegt, wobei die Maschine wenigstens einen Bearbeitungstank (4) enthält, der ausgerüstet ist einerseits mit Heizmitteln (7), die so beschaffen sind, daß sie das primäre Fluid (L) auf dem Siedepunkt halten, um so in einer Nutzzone (Za), über der Kühlungsmittel (8) angeordnet sind, einen primären Dampf zu erzeugen, und andererseits mit Mitteln, die in einer Vorheizungs- oder Kühlungszone (Zr), die über der Nutzzone (Za) angeordnet ist, ausgehend vom sekundären Fluid (12) einen sekundären Dampf erzeugen,
dadurch gekennzeichnet, daß die Kühlungsmittel (8) für den primären Dampf durch einen Wärmetauscher (11) zwischen dem primären Dampf und dem sekundären Fluid (12) gebildet sind, wobei der Tauscher mit Öffnungen (15) für die Entleerung des sekundären Dampfes in den Tank (4) versehen ist, derart, daß der Tauscher eine Kondensation den primären Dampfes und eine Verdampfung des sekundären Fluids sicherstellt, was ermöglicht, innerhalb des Tanks eine thermische Selbststabilisierung zu erhalten.

2. Maschine nach Anspruch 1, dadurch gekennzeichnet, daß der Wärmetauscher (11) wenigstens zum Teil durch die Wände eines das sekundäre Fluid (12) enthaltenden Behälters (13) gebildet ist.

3. Maschine nach Anspruch 2, dadurch gekennzeichnet, daß der Behälter (13) einen Boden (11₂) enthält, der in bezug auf die Wand des Tanks in der Weise vorsteht, daß eine Fläche gebildet wird, die einen konstanten Wärmeaustausch definiert.

4. Maschine nach Anspruch 2 oder 3, dadurch gekennzeichnet, daß der Behälter (13) mit einer Leitung (24) zum Zuführen des sekundären Fluids (12) versehen ist, dessen Pegel innerhalb des Behälters (13) mit Hilfe einer mit einem gesteuerten Verschluß (31) versehenen Überlaufleitung (30) auf einem konstanten Wert gehalten wird, wobei die Wärmeaustauschfläche zwischen dem Boden des Behälters (13) und dem durch die Überlaufleitung festgelegten maximalen Fluidpegel verändert werden kann.

5. Maschine nach einem der Ansprüche 2 bis 4, dadurch gekennzeichnet, daß der Behälter (13) eine Wärmeaustauschfläche aufweist, deren Abmessungen so beschaffen sind, daß sie die Wärme des primären Dampfes, die bei der maximalen Leistung der Heizmittel (7) erhalten wird, absorbieren kann.

6. Maschine nach einem der Ansprüche 2 bis 5, dadurch gekennzeichnet, daß der Behälter (13) mit einem Deckel (14) für die Wiedergewinnung der sekundären Dämpfe ausgerüstet ist.

7. Maschine nach einem der Ansprüche 2 bis 6, dadurch gekennzeichnet, daß der Behälter (13) mit einer Rinne (18) für die Wiedergewinnung der sekundären Dämpfe versehen ist, die an der Innenseite des Tanks verläuft.

8. Maschine nach einem der Ansprüche 2 bis 7, dadurch gekennzeichnet, daß der Behälter (13) mit Mitteln für die Kühlung des sekundären Fluids ausgerüstet ist.

9. Maschine nach einem der Ansprüche 2 bis 8, dadurch gekennzeichnet, daß der Behälter (13) mit einem Temperaturfühler (22) versehen ist, der mit Mitteln verbunden ist, die den Betrieb der Heizelemente (7) für das primäre Fluid anhalten können, wenn die Temperatur des Fühlers einen Wert erreicht, der im wesentlichen der Siedetemperatur des primären Dampfes entspricht.

10. Maschine nach einem der Ansprüche 2 bis 8, dadurch gekennzeichnet, daß der Behälter (13) versehen ist einerseits mit einer Leitung (32) für die Leerung des sekundären Fluids, die mit einem gesteuerten Verschluß (33) versehen ist, und andererseits mit einer Leitung (34) für die Rückführung des primären Fluids in den Tank (4), die mit einem gesteuerten Verschluß (35) versehen ist, wobei die Verschlüsse (33, 31, 35) der Leerungsleitung (32), der Überlaufleitung (30) und der Tankrückführungsleitung (34) in der Weise gesteuert werden, daß der Übergang von einer sogenannten Doppelphasen-Betriebsart, in der das primäre und das sekundäre Fluid verwendet werden, zu einer Einzelphasen-Betriebsart, in der ausschließlich das primäre Fluid verwendet wird, und umgekehrt möglich ist.

11. Maschine nach einem der Ansprüche 2 bis 8, dadurch gekennzeichnet, daß über dem Behälter (13) wenigstens ein Einleitungspunkt (40) für das sekundäre Fluid angebracht ist.

12. Maschine nach Anspruch 10, dadurch gekennzeichnet, daß die Leerungsleitung (32) mit Mitteln (31, 36) für die gesteuerte Umleitung versehen ist, die ermöglichen, die Rückführung des primären Fluids in ihren Sammelbehälter (37) sicherzustellen, wenn das primäre Fluid im Tank verdampft ist und die Kondensate durch den Behälter (13) wiedergewonnen werden, um die Wiedergewinnung des primären Fluids zu erhalten.

13. Maschine nach Anspruch 1, dadurch gekennzeichnet, daß die Ausgangsöffnungen (15) des sekundären Dampfes eine Gesamtfläche aufweisen, die kleiner als die Fläche des sekundären Fluids ist, um einen Überdruck und einen Ausstoß des Dampfes sicherzustellen.
